# EUROPÄISCHE PATENTSCHRIFT

(11) **EP 2 484 005 B1**
(45) Veröffentlichungstag und Bekanntmachung des Hinweises auf die Patenterteilung: **22.01.2014**
(21) Anmeldenummer: 10765611.8
(22) Anmeldetag: 29.09.2010
(51) Int. Cl.: H02P 1/18, H02P 9/30, H02J 7/14, H02P 1/16, H01R 43/14, F02N 11/08, H02K 23/68, H02K 23/66, F02N 11/10, F02N 15/02, F02N 15/06

(54) **VERFAHREN ZUM BETREIBEN EINER GLEICHSTROMMASCHINE**
METHOD FOR OPERATING A D.C. GENERATOR
PROCÉDÉ DE FONCTIONNEMENT D'UNE MACHINE À COURANT CONTINU

(30) Priorität: 01.10.2009 DE 102009045265
(43) Veröffentlichungstag der Anmeldung: 08.08.2012
(73) Patentinhaber: Robert Bosch GmbH, 70442 Stuttgart (DE)
(72) Erfinder: BAYER, Michael, 71636 Ludwigsburg (DE); HIRNING, Reiner, 71735 Eberdingen-Hochdorf (DE)
(86) Internationale Anmeldenummer: PCT/EP2010/064462
(87) Internationale Veröffentlichungsnummer: WO 2011/039257

(56) Entgegenhaltungen:
- DE-A1-102007 058 738
- US-A1- 2009 152 978

## Beschreibung

### Stand der Technik

Die Erfindung geht aus von einem Verfahren zum Betreiben einer Gleichstrommaschine nach der Gattung des unabhängigen Anspruchs. Derartige Verfahren sind bekannt, wobei insbesondere die Zusammensetzung und die Gestaltung der Bürsten besondere Aufmerksamkeit erfordert, um hinsichtlich der Lebensdauer des Kommutierungssystems und der Kommutierungsvorgänge günstige Bedingungen zu schaffen. Hierzu ist beispielsweise in der DE 60 2004 006 086 T2 eine elektrische Verbundbürste offenbart, welche zur Stabilisation der Reibungsverhältnisse zwei Schichten mit unterschiedlichem elektrischem Widerstand und unterschiedlichen Stoffzusammensetzungen offenbart, wodurch der Einsatz separater Schmierbürsten vermieden werden soll. Eine derartige Verbundbürste allein kann jedoch nur für einen bestimmten Betriebsfall einer bestimmten Maschine optimiert werden.

Besonders hohe Anforderungen sind an ein Verfahren zum Betreiben einer Gleichstrommaschine in der Gestalt eines Starters für eine Brennkraftmaschine zu stellen, weil diese zusätzlich zu sehr hohen Strombelastungen am Kommutierungssystem erschwerten Betriebsbedingungen ausgesetzt sind, insbesondere hinsichtlich Verschmutzung, Feuchtigkeit und stark schwankender Betriebstemperaturen. Hierbei wird der Betriebsstrom meist auf mehrere Bürstenpaare verteilt, welche über den Kommutator die Ankerwicklung speisen. In der Regel bestehen diese Bürsten aus einem Sinterwerkstoff, welcher hauptsächlich Kupfer- und Graphitanteile aufweist. Zur Erhöhung der Laufzeiten, wie sie beispielsweise im Start-Stopp-Betrieb von Startern für ein Kraftfahrzeug auftreten, sind jedoch zusätzliche Maßnahmen erforderlich, um einerseits eine Schmierung des Kommutierungssystems und andererseits eine Reinigung der Kommutatoroberfläche zu erreichen. Diese, im Folgenden als Patinierung bezeichnete Schicht muss daher zur Erzielung hoher Betriebszeiten der Maschine optimiert werden, was allein durch die Auswahl des Bürstenwerkstoffes nicht oder zumindest nur für bestimmte Betriebsbedingen möglich ist. Zu hohe Anteile an Putzmitteln in den Bürsten vergrößern den Verschleiß am Kommutator. Zu geringe Putzmittelanteile verbessern zwar die Gleiteigenschaften der Bürsten auf dem Kommutator, nach längerer Laufzeit wird der Belag jedoch zu dick und damit der Übergangswiderstand von den Bürsten zum Kommutator zu hoch, was sich durch eine Leistungsabnahme und auch durch eine Schädigung des Kommutierungssystems durch Temperaturerhöhungen aufgrund des höheren Übergangswiderstandes und durch Strombündelungen im Übergangsbereich mit einem nachteiligen Effekt auf die Lebensdauer der Maschine auswirkt. Aus der DE 10 2007 058738 A1 ist ein Verfahren zum Betreiben eine Gleichstrommaschine bekannt. Hierbei wird eine Patinierung des Kommutators durch Überwachung des maschinenspezifischen Einschaltstroms ermittelt. Durch Änderung der Betriebsparameter der Maschine wird die Patinierung korrigiert.

### Offenbarung der Erfindung

Das erfindungsgemäße Verfahren zum Betreiben einer Gleichstrommaschine, insbesondere eines Starters für eine Brennkraftmaschine, hat den Vorteil, dass maschinenspezifische Betriebsbedingungen ohne Änderungen an den Bürsten ausgeglichen werden können. Als zweckmäßig hat es sich erwiesen, wenn die Korrektur der Patinierung des Kommutators sowohl bei zu starker wie auch bei zu schwacher Patinierung in Betriebszyklen erfolgt, welche vom Normalbetrieb getrennt sind. Zur Erhöhung der Standzeiten des Kommutierungssystems durch Einflussnahme auf die Patinierung des Kommutators wird dabei insbesondere der mit der Patinierung veränderliche Spannungseinbruch an der Gleichspannungsquelle beim Einschalten des Starters genutzt, welcher einen klaren Rückschluss auf die Stärke der Patinierung der Oberfläche des Kommutators zulässt. Durch eine geeignete Überwachung des maschinenspezifischen Einschaltstromes, beziehungsweise des durch die Patinierung bedingten geringeren Spannungseinbruchs beim Einschalten der Maschine, ist es dann möglich, mittels einer Änderung der Betriebsparameter der Maschine auf die Patinierung des Kommutierungssystems gezielt einzuwirken.

Besonders vorteilhaft ist es, wenn die Überwachung des Einschaltstromes der Maschine anhand des beim Einschalten auftretenden Spannungseinbruchs im Hauptstromkreis der Maschine, vorzugsweise des Spannungseinbruchs an der Gleichspannungsquelle, erfolgt. Dieser Spannungseinbruch ist leicht zu erfassen und lässt eine hinreichend genaue Aussage über den Patinierungszustand des Kommutators zu, da andere Einflüsse auf diesen Spannungseinbruch, wie etwa Veränderungen des Zuleitungswiderstandes oder des Widerstandes des Starters und Veränderungen an der speisenden Spannungsquelle durch vorzugsweise permanente Erfassung und Bewertung ausgeblendet werden können. Insbesondere die Spannungslage vor und nach dem Start muss bei den Korrekturmaßnahmen berücksichtigt werden.

Hierbei haben sich zur Reduzierung einer zu starken Patinierung des Kommutierungssystem eines Starters für eine Brennkraftmaschine insbesondere Reinigungszyklen mit erhöhter Drehzahl bewährt. Diese lassen sich bei einem zweistufigen Einspurvorgang des Starters ohne Schwierigkeit in einem vom Einspuren getrennten Zyklus mit hoher Drehzahl, insbesondere mit Leerlaufdrehzahl, durchführen. Hierbei wird vorzugsweise ein Leerlaufzyklus mit einer Dauer von 2 bis 5 Sekunden durchfahren, welcher dem Starter nicht schadet und bei Bedarf in einem oder mehreren nachfolgenden Startvorgängen wiederholt werden kann. Ein entsprechender Reinigungszyklus kann auch bei einem einstufig eingeschalteten Starter ohne Entkopplung des Einspurvorgangs vom Andrehvorgang realisiert werden, indem die Abwurfdrehzahl des Starters erhöht wird, vorzugsweise ebenfalls bis auf eine etwa der Leerlaufdrehzahl der Maschine entsprechende Drehzahl. Auch diese Drehzahlerhöhung kann einmalig oder bei Bedarf mehrmalig durchgeführt werden, bis die gewünschte Reduzierung der Beschichtung erreicht ist.

Unter Betriebsbedingungen, bei denen die am Kommutator entstehende Patinierung für eine ausreichende Schmierung zu gering ist, kann eine erhöhte Patinierung durch einen oder mehrere kurzzeitige Bestromungszyklen mit hohem Strom und niedriger Drehzahl erreicht werden. Bezogen wiederum auf einen Starter für eine Brennkraftmaschine ist diese Art der Verstärkung der Beschichtung zumindest bei einem zweistufig einspurenden Starter ohne Schwierigkeit möglich, da die Drehzahl, die Stromhöhe und deren Dauer getrennt vom Einspuren gesteuert werden können. Bei einem einstufig einspurenden Starter könnte dazu der Startvorgang nach kurzer, hoher Bestromung abgebrochen und wiederholt werden, hierbei entstehen jedoch unerwünschte Geräusche und der Verschleiß insbesondere des Einspursystems wird erhöht. Durch die Möglichkeit der Einflussnahme auf die Stärke der Patinierung des Kommutierungssystems einer Gleichstrommaschine wird es weiterhin ermöglicht, die Stoffzusammensetzung der Bürsten derart zu wählen, dass schon bald nach Inbetriebnahme der Maschine eine ausreichende Schmierung des Kommutierungssystems erfolgt. Hierzu kann die Zusammensetzung der verschiedenen Bürstenmaterialien im Sinne einer stärkeren Grundschmierung des Kommutierungssystems erhöht werden, welche dann nach Erreichen der ausreichenden Patinierung im Betrieb der Maschine durch die erfindungsgemäßen Maßnahmen auf einem vorgebbaren, optimalen Wert gehalten wird.

Weitere Einzelheiten und vorteilhafte Ausgestaltungen des erfindungsgemäßen Verfahrens ergeben sich aus den Unteransprüchen und der Beschreibung der Ausführungsbeispiele, welche in den Zeichnungen dargestellt und in der nachfolgenden Beschreibung näher erläutert sind.

Es zeigen
- Figur 1: eine Prinzipdarstellung eines Schub-Schraub- Starters mit einer Reihenschluss-Erregerwicklung,
- Figur 2: eine schematische Kennliniendarstellung eines Gleichstrommotors mit einer Reihenschlusserregerwicklung, beziehungsweise mit einer permanentmagnetischen Erregung,
- Figur 3: den Verlauf der Drehzahl und des Stromes eines Startermotors beim Starten einer Brennkraftmaschine,
- Figur 4: eine schematisierte Darstellung des Hauptstromkreises einer Gleichstrommaschine,
- Figur 5: ein Schaltschema eines einstufig bestrombaren Starters für eine Brennkraftmaschine und
- Figur 6: ein Schaltschema eines zweistufig bestrombaren Starters für eine Brennkraftmaschine.

### Ausführungsformen der Erfindung

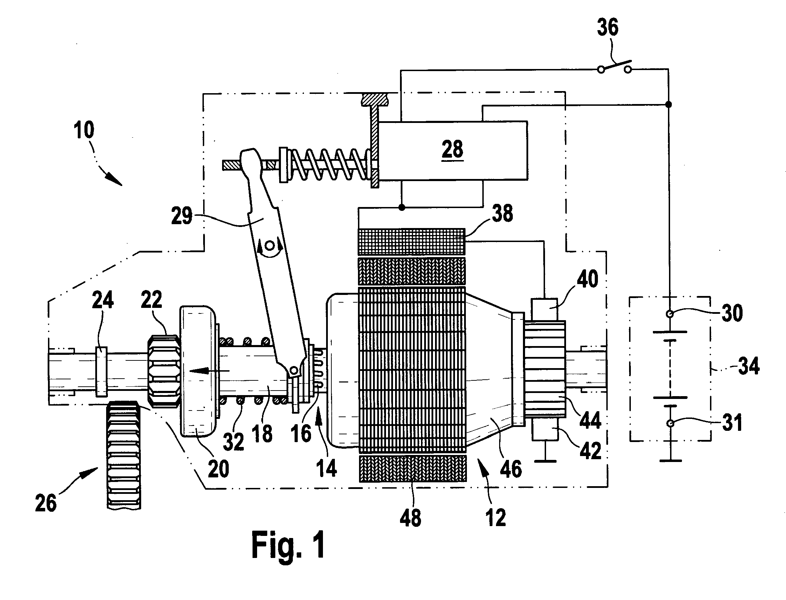

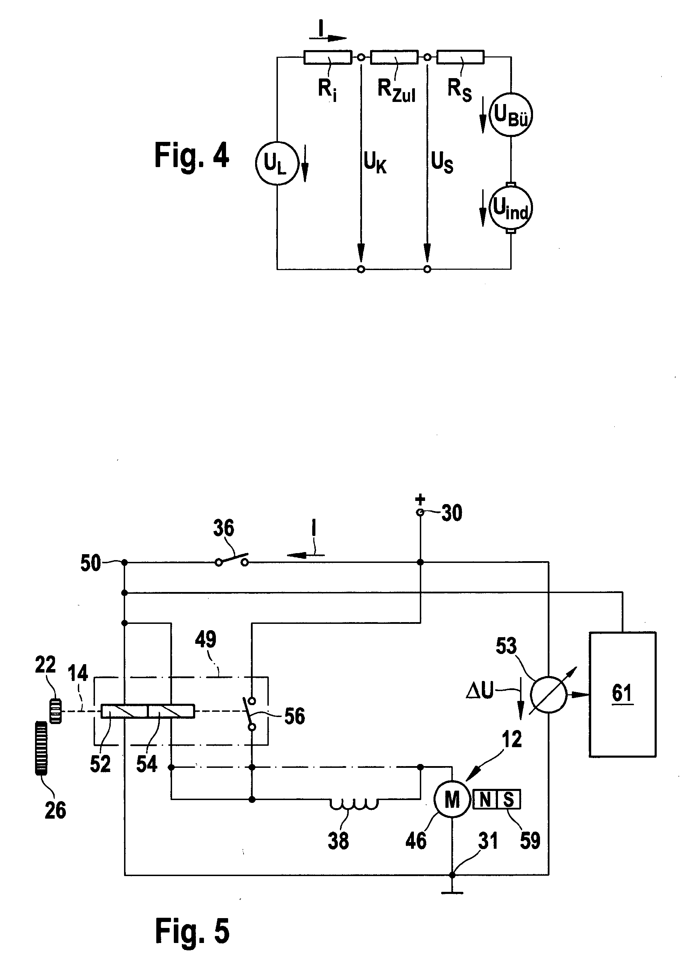

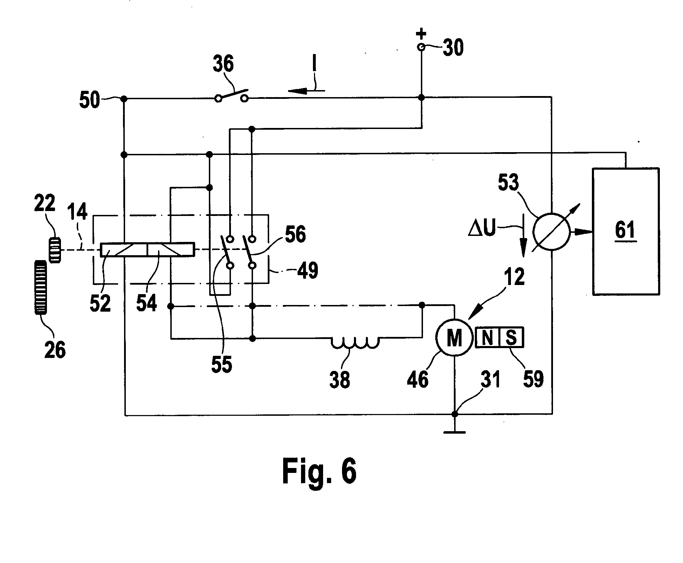

Figur 1 zeigt schematisiert den mechanischen Aufbau einer Gleichstrommaschine in der Ausführung als Schub-Schraubtrieb-Starter für eine Brennkraftmaschine. Der Starter 10 besitzt einen Startermotor 12, dessen Abtriebswelle 14 ein Steilgewinde 16 aufweist, welches mit einem entsprechenden Muttergewinde in einem Mitnehmerschaft 18 zusammenwirkt. Alternativ wird die Abtriebswelle 14 über ein nicht dargestelltes, zwischengeschaltetes Planetengetriebe angetrieben. Der Mitnehmerschaft 18 ist mit dem Außenring eines Freilaufrings 20 fest verbunden, dessen Innenring ein Ritzel 22 trägt. Das Ritzel 22 und der Freilauf 20 sind auf der Abtriebswelle 14 bis zu einem Anschlag 24 axial verschiebbar gelagert. Das Ritzel 22 wird dabei in einen Zahnkranz 26 einer nicht dargestellten Brennkraftmaschine eingespurt. Die Axialverschiebung erfolgt mit Hilfe einer in den Figuren 5 und 6 detailliert dargestellten Relaisanordnung 28, welche über einen Umlenkhebel 30 und eine Einspurfeder 32 am Freilauf 20 angreift. Als Spannungsquelle 34 der Anordnung dient eine Batterie, welche mit ihrem Minuspol 31 an Masse liegt und mit ihrem Pluspol 30 einerseits direkt und andererseits über einen Zündstandschalter 36 mit der Relaisanordnung 28 verbunden ist. Über die Relaisanordnung wird eine Reihenschlusswicklung 38 gespeist, welche über Bürsten 40 und 42 sowie über den Kollektor 44 des Motors mit Masse verbunden ist. Anstelle der Reihenschlusswicklung kann die Maschine in bekannter Weise auch eine permanentmagnetische Erregung aufweisen. Der vorzugsweise sechspolig ausgeführte Anker des Startermotors 12 ist mit 46, sein Stator mit 48 bezeichnet.

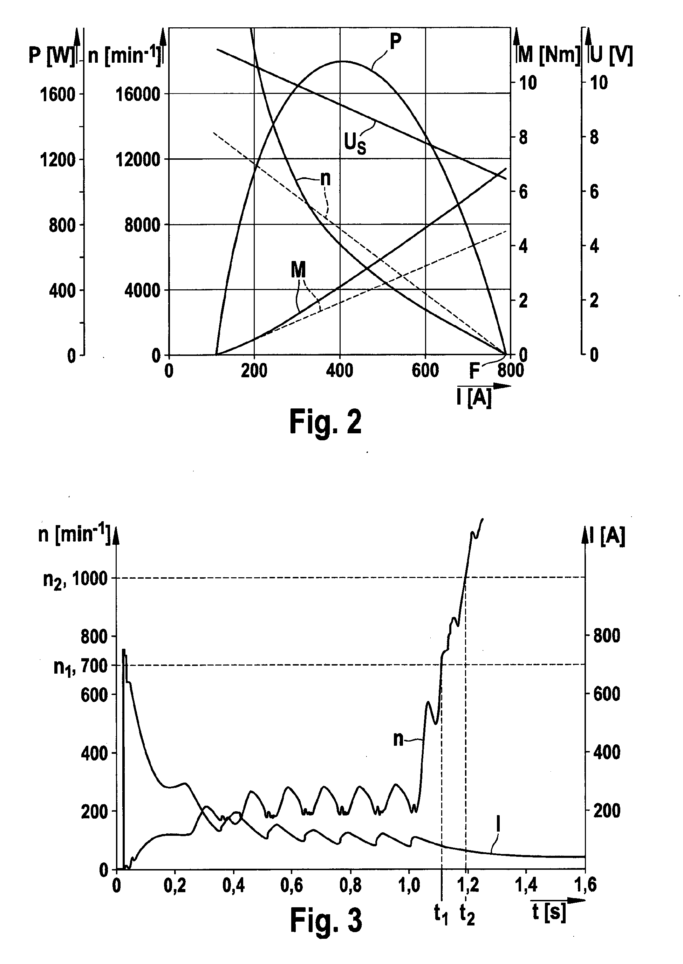

Figur 2 zeigt die Kennlinien eines erfindungsgemäß betriebenen Gleichstrommotors, wobei die Drehzahl und das Drehmoment der Maschine in durchgezogenen Linien für einen Reihenschlussmotor und in gestrichelten Linien für einen permanentmagnetisch erregten Motor schematisch dargestellt sind. Die Abbildung zeigt, dass für den beispielhaft dargestellten Motor der Kurzschlussstrom I bei der Drehzahl n = 0 cirka 800 A erreicht. Während die Drehzahl des permanentmagnetisch erregten Motors nun linear ansteigt erfolgt der Drehzahlanstieg bei der Reihenschlussmaschine hyperbelartig bis zu einer deutlich über der Drehzahl des permanentmagnetisch erregten Motors liegenden Leerlaufdrehzahl bei einem Strom von cirka 100 bis 200 A. Entsprechend dem Drehmomentverlauf einer Nebenschlussmaschine steigt das Drehmoment M der permanentmagnetisch erregten Maschine etwa linear mit dem Strom I an, während das Drehmoment der Reihenschlussmaschine überproportional mit dem Motorstrom I zunimmt. Die Spannung an dem beispielhaft dargestellten PKW-Startermotor ist mit Us bezeichnet. Aus der Darstellung ist ersichtlich, dass sie mit ansteigender Drehzahl bei abnehmendem Motorstrom ansteigt, und zwar bei dem betrachteten, aus einem 12 V-Bordnetz gespeisten Startermotor von cirka 6 V beim Einschalten auf cirka 11 V im Leerlauf des Motors.

Sobald sich nun auf der Oberfläche des Kommutators eine Patinierung ausbildet, welche bei gebräuchlichen Bürsten überwiegend aus nicht oder sehr schlecht leitendem Kupferoxyd (Cu₂O) besteht, wandert der Fußpunkt F des Motorstromes I nach links zu niedrigeren Stromwerten hin, welche um etwa 10% unter dem Stromwert bei nicht patiniertem Kommutator liegen. Hierbei nimmt die Leistung p sowie das von dem Motor abgegebene Moment M ab. Gleichzeitig wird der Spannungseinbruch an der speisenden Gleichspannungsquelle geringer und kann als Maß für die Patinierung des Kommutators in der erfindungsgemäßen Weise benutzt werden. Die Betriebsparameter der Maschine können dann zur Reduzierung, bei Bedarf aber auch zu einer Erhöhung der Patinierung des Kommutators verändert werden.

Figur 3 veranschaulicht den Verlauf der Drehzahl und des Stromes eines Startermotors für ein Kraftfahrzeug als bevorzugtes Anwendungsbeispiel des erfindungsgemäßen Verfahrens. Die Abbildung zeigt nochmals, dass der Kurzschlussstrom aus dem Stillstand des Motors heraus sehr schnell und steil ansteigt bis auf einen Wert von nahezu 800 A und anschließend innerhalb einer Zeit von 1,4 s bis 1,6 s auf seinen Leerlaufwert absinkt, wobei die zu erkennenden Schwingungen durch die unterschiedlichen Belastungen des Startermotors aufgrund der Kompressionen des angetriebenen Verbrennungsmotors bedingt sind. Die Drehzahl n nimmt mit entsprechenden Schwankungen zunächst langsam zu bis der Verbrennungsmotor nach cirka 1 s startet, wodurch der Startermotor entlastet wird und die Drehzahl steil ansteigt.

Dem Startvorgang des Verbrennungsmotors entspricht im Normalbetrieb eine Drehzahl n₁ des Starters im Bereich von cirka 700 U/min, welche beim dargestellten Ausführungsbeispiel zur Zeit t₁ erreicht wird. Zur Reduzierung einer Patinierung auf der Oberfläche des Kommutators des Startermotors kann diese Drehzahl nun erhöht werden, wobei wahlweise die Abwurfdrehzahl oder die Einschaltdauer des Starters vergrößert werden. Durch gestrichelte Linien ist dargestellt, dass die Abwurfdrehzahl (n₁,n₂) des Starters beispielsweise von 700 auf 1000 U/min erhöht, beziehungsweise nach Erreichen der normalen Abwurfdrehzahl noch eine Zeit von ca. 0,1 bis 0,2 s gewartet wird, bevor der Starter abgeworfen wird, um die Reduzierung der Patinierung zu erreichen. Dabei kann wahlweise die Drehzahl n selbst überwacht und begrenzt werden oder alternativ die Einschaltdauer nach Erreichen der Abwurfdrehzahl des Starters auf eine Zeit t2 gesetzt werden. Als Abwurfdrehzahl bezeichnet man hierbei diejenige Drehzahl, bei der nach dem Loslassen des Zündschlüssels und dem Öffnen des Kontaktes 36 der Relaisstromkreis unterbrochen und das Ritzel 22 durch die Einspurfeder 32 und das Steilgewinde 16 aus dem Zahnkranz 26 ausgerückt wird.

Figur 4 zeigt den Hauptstromkreis einer Gleichstrommaschine. Es bezeichnen Rᵢ den Innenwiderstand der speisenden Gleichstromquelle, R_{Zul} den Zuleitungswiderstand, R_{S} den Widerstand des (Starter-)Motors, I den Motorstrom, U_{L} die Leerlaufspannung der Batterie, U_{K} die Klemmenspannung der Batterie, U_{S} die Spannung am Startermotor, U_{Bü} den Bürstenspannungsabfall und U_{ind} die induzierte Spannung der Ankerwicklung. Grundsätzlich kann zur Überwachung des Einschaltstromes der Maschine jede der angegebenen Spannungen überwacht werden. Am leichtesten erfassbar ist jedoch die Klemmenspannung U_{K} der Batterie, welche in sehr einfacher Weise zwischen deren Anschlüssen 30 und 31 der Spannungsquelle abgegriffen werden kann. Hierbei ist es wesentlich, dass die Bewertung des Einschaltstromes I jeweils unter Berücksichtigung der Ausgangslage im Hauptstromkreis der Maschine erfolgt, insbesondere unter Berücksichtigung der Spannungslage an der Gleichspannungsquelle vor und nach dem Start. Außerdem muss bei der Messung die Temperatur der Maschine und/oder der Spannungsquelle berücksichtigt werden, da beide Einflüsse ebenfalls die Höhe des vom Motorstrom erzeugten Spannungsabfalls beeinflussen.

Figur 5 zeigt ein Schaltschema eines einstufig bestromten Starters. Hierbei ist der Pluspol 30 der Spannungsquelle einerseits über den Zündstartschalter 36 sowie einen Anschluss 50 und andererseits direkt mit einem Einrückrelais 49 verbunden. Dieses enthält eine Haltewicklung 52 und eine Einzugswicklung 54 welche den gleichen Wickelsinn aufweisen, auf den gleichen Kern gewickelt sind und beide, bei Bedarf über ein Vorsteuerrelais, mit einem Wicklungsende mit dem Anschluss 50 verbunden sind. Das andere Wicklungsende der Haltewicklung 52 liegt am Minuspol 31 und an Masse, das entsprechende andere Wickelende der Haltewicklung 54 ist über die Reihenschlusswicklung 38, beziehungsweise bei permanentmagnetischer Erregung direkt über den Anker 46 des Startermotors 12 mit dem Minuspol 31 und mit Masse verbunden. Gemeinsam betätigen die Haltewicklung und die Einzugswicklung einen Arbeitskontakt 56 des Einrückrelais 49, über den der Startermotor 12 direkt mit dem Pluspol 30 verbunden wird, sobald der Relaisanker ganz oder nahezu ganz eingezogen und das Ritzel 22 in den Zahnkranz 26 eingespurt ist.

Die Haltewicklung 52 und die Einzugswicklung 54 übernehmen bei dieser bekannten Anordnung gemeinsam die Arbeit des Einspurens des Ritzels 22 in den Zahnkranz 26 an der Brennkraftmaschine und gleichzeitig die Funktion des Schaltens des Hauptstromes für den Startermotor 12. Hierbei besteht der Einspurweg aus dem Schubweg und dem Schraubweg, welche nicht voneinander getrennt werden können. Beim Schubweg schiebt der Relaisanker des Einrückrelais 49 das Ritzel 22 über den Einrückhebel in Richtung Zahnkranz 26. Der Schraubweg wird durch das Steilgewinde 16 erzeugt.

Beim Abwerfen des Starters werden die Relaiswicklungen abgeschaltet und gleichzeitig drückt die in Figur 5 nicht dargestellte Einspurfeder 32 den Relaisanker und über den Umlenkhebel 29 das Ritzel 22 in die Ruhelage zurück. Hierbei unterstützt das Steilgewinde 16 das Ausspuren des Ritzels, da beim Überholen des Verbrennungsmotors das durch die Reibung im Freilauf entstehende Überholmoment mit dem Steilgewinde eine Axialkraft erzeugt, die das Ritzel 22 aus dem Zahnkranz 26 ausspurt.

Diese grundsätzlich bekannte Anordnung wird bei dem erfindungsgemäßen Verfahren durch eine Messeinrichtung 53 erweitert, welche die Spannung zwischen dem Pluspol 30 und dem Minuspol 31 der speisenden Spannungsquelle überwacht. Die bei einer Verringerung des Kurzschlussstromes durch eine Patinierung des Kommutators 44 bedingte Spannungsabnahme ΔU wird an eine Steuereinheit 61 weiterleitet, welche die Größe der Spannungsabnahme überwacht und bei Überschreiten einer der Abnahme des Einschaltstromes entsprechenden Schwelle ein Steuersignal zur Verzögerung des Starterabwurfs erst nach Erreichen einer erhöhten Drehzahl n₂ des Startermotors abgibt. Die Messeinrichtung 53 erkennt so eine unzulässig hohe Patinierung des Kommutierungssystems und bewirkt über die Steuereinheit 61 eine vom Normalbetrieb der Maschine abweichende, erhöhte Abwurfdrehzahl n₂. Dieser Vorgang kann bei Bedarf wiederholt werden, um die Reduzierung der Patinierung bis zum Erreichen des gewünschten Abtrages fortzusetzen. Die Steuerung des Abwurfs kann dabei, wie bereits anhand der Figur 3 erläutert, entweder drehzahlabhängig oder zeitabhängig gesteuert und begrenzt werden, wobei die Abwurfdrehzahl etwa auf die Höhe der Leerlaufdrehzahl des Startermotors begrenzt wird. An den Bürsten müssen hierbei keine Veränderungen vorgenommen werden, da praktisch bei allen Bürstenausführungen deren normale Oberflächenrauheit bei Erhöhung der Abwurfdrehzahl zum Abtragen der Patinierung ausreicht.

Die Schaltungsanordnung gemäß Figur 6 entspricht weitgehend derjenigen in Figur 5, jedoch weist hierbei das Einrückrelais 49 einen zusätzlichen Ruhekontakt 55 auf, mit dessen Hilfe das Einspuren des Ritzels 22 in den Zahnkranz 26 einer Brennkraftmaschine zweistufig erfolgt. Hierbei fließt nach dem Schließen des Zündstartschalters 36 zunächst ein reduzierter Strom über die Einzugswicklung 54 des Einrückrelais 49, bei einem Reihenschlussmotor über die Reihenschlusswicklung 38, bei einem permanentmagnetisch erregten Motor direkt über den Anker 46 zum Minuspol 31 der Gleichspannungsquelle. Die magnetische Kraft des Einrückrelais 49 bewegt das Ritzel 22 des Starters gegen den Zahnkranz 26 und bringt es bei gleichzeitig anlaufendem Anker 46 mit dem Zahnkranz schonend in Eingriff. Den vollen Erreger- und Ankerstrom schaltet das Einrückrelais 49 erst in der zweiten Schaltstufe unmittelbar vor dem Ende des Ritzel-Einspurweges über den Arbeitskontakt 56 ein.

Eine zu starke Patinierung des Kommutierungssystems kann bei einem derartigen, mehrstufig einschaltbaren Starter durch die Entkopplung des Einspurvorgangs vom Andrehvorgang in einem Reinigungszyklus im Leerlauf durchgeführt werden. Zur Schonung des Kommutierungssystems wird der Reinigungszyklus auf eine Dauer von 2 bis 5 s begrenzt. Bei Bedarf kann der Reinigungszyklus bei nachfolgenden Startvorgängen wiederholt werden.

Zur Trennung des Startvorganges des Motors 12 vom Einspurvorgang des Ritzels 22 in den Zahnkranz 26 wird ein entsprechender Steuerbefehl von der Steuereinheit 61 an das Einrückrelais 49 ausgegeben, welcher in der Darstellung gemäß Figur 6 analog zu der Darstellung in Figur 5 durch eine Verbindungsleitung von der Steuereinheit 61 zum Einrückrelais 49 nur schematisch dargestellt ist. Dieser Steuerbefehl ergeht, wiederum analog zu der Ausführung in Figur 5, sobald die Messeinrichtung 53 einen zu geringen Spannungseinbruch ΔU zwischen den Polen 30 und 31 der Gleichspannungsquelle detektiert und die Steuereinheit 61 aktiviert.

In ähnlicher Weise kann bei einer zweistufigen Ausführung der Einspurvorrichtung eines Startermotors 12 und einer Entkopplung des Motoranlaufs vom Einspurvorgang eine zu schwache Patinierung und Schmierung des Kommutierungssystems durch wenigstens einen kurzzeitigen Bestromungszyklus mit hoher Strombelastung und niedriger Drehzahl korrigiert werden. Vorzugsweise wird eine derartige hohe Strombelastung im Bereich des Kurzschlussstromes auf eine Dauer von cirka 50 ms begrenzt. Reicht die Erhöhung der Patinierung des Kommutators 44 nach einem Bestromungszyklus nicht aus, so kann auch dieser Vorgang bei nachfolgenden Startvorgängen wiederholt werden. Eine derartige Erhöhung der Patinierung und Schmierung des Kommutierungssystems ist insbesondere bei Applikationen vorteilhaft, die mit den verwendeten Kohlebürsten 42 unter einem starken Kommutatorverschleiß wegen zu geringer Patinierung leiden. Auf diese Weise können härtere Bürsten mit längeren Standzeiten in dem Kommutierungssystem eingesetzt werden, da die Grundschmierung des Kommutierungssystems der Maschine durch eine stärkere Patinierung bei Bedarf korrigierbar ist. Bei dieser Art der Bestromung nimmt der Motor 12 keine hohe Drehzahl auf, die Strombelastung ist jedoch hoch entsprechend dem hohen Strom beim Losdrehen des Motors. Diese Vorgang kann wahlweise pulsartig nacheinander oder bei folgenden Startvorgängen so lange wiederholt werden, bis sich eine ausreichende Patinierung des Kommutators gebildet hat, wobei die Stärke der Patinierung wiederum durch die Größe des Spannungseinbruchs ΔU beim Einschalten des Stromes I von der Messeinrichtung 53 an den Polen der Gleichspannungsquelle erfasst wird.

## Patentansprüche

1. Verfahren zum Betreiben einer Gleichstrommaschine, insbesondere eines Starters (10) für eine Brennkraftmaschine, mit einem über Bürsten (42) und einen Kommutator (44) aus einer Gleichspannungsquelle (31,32;34) gespeisten Anker (46), wobei eine Patinierung des Kommutators (46) durch Überwachung des maschinenspezifischen Einschaltstromes (I) ermittelt und durch Änderung der Betriebsparameter der Maschine korrigiert wird, **dadurch gekennzeichnet, dass** eine zu starke oder zu schwache Patinierung des Kommutierungssystems (44) in vom Normalbetrieb der Maschine getrennten Betriebszyklen korrigiert wird.

2. Verfahren nach Anspruch 1, **dadurch gekennzeichnet**, das die Überwachung des Einschaltstromes (I) der Maschine anhand des beim Einschalten auftretenden Spannungseinbruchs (ΔU) im Hauptstromkreis der Maschine erfolgt.

3. Verfahren nach Anspruch 1 oder 2, **dadurch gekennzeichnet, dass** die Überwachung des Einschaltstromes (I) der Maschine anhand des Spannungseinbruchs (ΔU) an der Gleichspannungsquelle (31,32;34) erfolgt.

4. Verfahren nach einem der vorhergehenden Ansprüche, **dadurch gekennzeichnet, dass** die Bewertung des Einschaltstromes (I) unter Berücksichtigung der Ausgangslage im Hauptstromkreis der Maschine erfolgt.

5. Verfahren nach Anspruch 4, **dadurch gekennzeichnet, dass** die Bewertung des Einschaltstromes (I) unter Berücksichtigung der Spannungslage der Gleichspannungsquelle (31,32;34) vor und nach dem Start erfolgt.

6. Verfahren nach Anspruch 4 oder 5, **dadurch gekennzeichnet, dass** die Bewertung des Einschaltstromes (I) unter Berücksichtigung der Temperatur der Maschine und/oder der Spannungsquelle (31,32;34) erfolgt.

7. Verfahren nach einem der vorhergehenden Ansprüche, **dadurch gekennzeichnet, dass** eine zu starke Patinierung des Kommutierungssystems (44) in Reinigungszyklen mit erhöhter Drehzahl (n) der Maschine reduziert wird.

8. Verfahren nach einem der vorhergehenden Ansprüche, **dadurch gekennzeichnet, dass** eine zu starke Patinierung des Kommutierungssystems (44) eines mehrstufig einschaltbaren Starters (10) mit Entkopplung des Einspurvorgangs vom Andrehvorgang durch einen Reinigungszyklus im Leerlauf erfolgt.

9. Verfahren nach Anspruch 8, **dadurch gekennzeichnet, dass** der Leerlaufzyklus 2 bis 5 Sekunden dauert und bei Bedarf, vorzugsweise beim nächsten Startvorgang, wiederholt wird.

10. Verfahren nach einem der Ansprüche 1 bis 7, **dadurch gekennzeichnet, dass** eine zu starke Patinierung des Kommutierungssystems (44) eines einstufig einschaltbaren Starters (10) ohne Entkoppelungsmöglichkeit des Einspurvorgangs vom Andrehvorgang durch eine Erhöhung der Abwurfdrehzahl (n₂) des Starters von der Brennkraftmaschine reduziert wird.

11. Verfahren nach Anspruch 10, **dadurch gekennzeichnet, dass** eine zu starke Patinierung des Kommutierungssystems (44) durch eine mehrmalige Erhöhung der Abwurfdrehzahl (n₂) während einer vorgebbaren Anzahl von Startvorgängen reduziert wird.

12. Verfahren nach einem der Ansprüche 9 bis 11, **dadurch gekennzeichnet, dass** die erhöhte Abwurfdrehzahl (n₂) etwa der Leerlaufdrehzahl des Startermotors (12) entspricht.

13. Verfahren nach einem der Ansprüche 1 bis 6, **dadurch gekennzeichnet, dass** eine zu schwache Patinierung und Schmierung des Kommutierungssystems (44) durch wenigstens einen kurzzeitigen Bestromungszyklus mit hoher Strombelastung und niedriger Drehzahl korrigiert wird.

14. Verfahren nach Anspruch 13, **dadurch gekennzeichnet, dass** für die Kommutierung Bürsten (42) mit größerer Härte und längerer Standzeit verwendet und eine stärkere Grundschmierung des Kommutators (44) durch eine stärkere, korrigierbare Patinierung erzeugt wird.

## Claims

1. Method for operating a DC machine, in particular a starter (10) for an internal combustion engine, comprising an armature (46) which is fed from a DC voltage source (31, 32; 34) by means of brushes (42) and a commutator (44), wherein patination of the commutator (46) is determined by monitoring the machine-specific switch-on current (I) and corrected by changing the operating parameters of the machine, **characterized in that** an excessively high or excessively low patination of the commutation system (44) is corrected in operating cycles which are separate from normal operation of the machine.

2. Method according to Claim 1, **characterized in that** the switch-on current (I) of the machine is monitored on the basis of the voltage drop (ΔU) in the main circuit of the machine which occurs in the event of switch on.

3. Method according to Claim 1 or 2, **characterized in that** the switch-on current (I) of the machine is monitored on the basis of the voltage drop (ΔU) across the DC voltage source (31, 32; 34).

4. Method according to one of the preceding claims, **characterized in that** the switch-on current (I) is assessed taking into account the initial position in the main circuit of the machine.

5. Method according to Claim 4, **characterized in that** the switch-on current (I) is assessed taking into account the voltage position of the DC voltage source (31, 32; 34) before and after the start.

6. Method according to Claim 4 or 5, **characterized in that** the switch-on current (I) is assessed taking into account the temperature of the machine and/or the voltage source (31, 32; 34).

7. Method according to one of the preceding claims, **characterized in that** an excessively high patination of the commutation system (44) is reduced in cleaning cycles with an increased rotation speed (n) of the machine.

8. Method according to one of the preceding claims, **characterized in that** an excessively high patination of the commutation system (44) of a starter (10) which can be switched on in several stages with decoupling of the engagement process from the start-up process is reduced by a cleaning cycle in the idling state.

9. Method according to Claim 8, **characterized in that** the idling cycle lasts for 2 to 5 seconds and is repeated if required, preferably during the next starting process.

10. Method according to one of Claims 1 to 7, **characterized in that** an excessively high patination of the commutation system (44) of a starter (10) which can be switched on in one stage without the option of decoupling the engagement process from the start-up process is reduced by increasing the discharge rotation speed (n₂) of the starter of the internal combustion engine.

11. Method according to Claim 10, **characterized in that** an excessively high patination of the commutation system (44) is reduced by increasing the discharge rotation speed (n₂) several times during a prespecifiable number of starting processes.

12. Method according to one of Claims 9 to 11, **characterized in that** the increased discharge rotation speed (n₂) corresponds approximately to the idling rotation speed of the starter motor (12).

13. Method according to one of Claims 1 to 6, **characterized in that** an excessively low patination and lubrication of the commutation system (44) is corrected by at least one brief power-supply cycle with high current loading and low rotation speed.

14. Method according to Claim 13, **characterized in that** brushes (42) with a relatively high hardness and a relatively long service life are used and greater basic lubrication of the commutation system (44) is generated by greater patination which can be corrected.

## Revendications

1. Procédé de conduite d'une machine à courant continu, en particulier du démarreur (10) d'un moteur à combustion interne, la machine présentant un induit (46) alimenté par une source (31, 32; 34) de tension continue par l'intermédiaire de balais (42) et d'un commutateur (44), le patinage du commutateur (46) étant déterminé par surveillance du courant de branchement (I) spécifique à la machine et étant corrigé par une modification des paramètres de fonctionnement de la machine,
**caractérisé en ce que**
un patinage trop important ou trop faible du système de commutation (44) est corrigé dans des cycles de fonctionnement distincts du fonctionnement normal de la machine.

2. Procédé selon la revendication 1, **caractérisé en ce que** la surveillance du courant de branchement (I) de la machine s'effectue à l'aide de la chute de tension (ΔU) qui survient dans le circuit principal de courant lors du branchement.

3. Procédé selon les revendications 1 ou 2, **caractérisé en ce que** la surveillance du courant de branchement (I) de la machine s'effectue à l'aide de la chute de tension (ΔU) sur la source (31, 32; 34) de tension continue.

4. Procédé selon l'une des revendications précédentes, **caractérisé en ce que** l'évaluation du courant de branchement (I) s'effectue en tenant compte de la situation initiale du circuit principal de courant.

5. Procédé selon la revendication 4, **caractérisé en ce que** l'évaluation du courant de branchement (I) s'effectue en tenant compte de l'état de la tension de la source (31, 32; 34) de tension continue avant et après le démarrage.

6. Procédé selon les revendications 4 ou 5, **caractérisé en ce que** l'évaluation du courant de branchement (I) s'effectue en tenant compte de la température de la machine et/ou de la source de tension (31, 32; 34).

7. Procédé selon l'une des revendications précédentes, **caractérisé en ce qu'**un patinage trop important du système de commutation (44) est réduit dans des cycles de nettoyage dans lesquels la vitesse de rotation (n) de la machine est augmentée.

8. Procédé selon l'une des revendications précédentes, **caractérisé en ce qu'**un patinage trop important du système de commutation (44) d'un démarreur (10) apte à être démarré en plusieurs étapes et doté d'un découplage de l'opération d'enclenchement mécanique par rapport à l'opération de démarrage est réduit par un cycle de nettoyage en fonctionnement à vide.

9. Procédé selon la revendication 8, **caractérisé en ce que** le cycle de fonctionnement à vide dure de 2 à 5 secondes et est répété si nécessaire de préférence lors de l'opération suivante de démarrage.

10. Procédé selon l'une des revendications 1 à 7, **caractérisé en ce qu'**un patinage trop important du système de commutation (44) d'un démarreur (10) apte à être branché en une seule étape et sans possibilité de découplage de l'opération d'enclenchement mécanique par rapport à l'opération de démarrage est réduit par augmentation de la vitesse de rotation (n₂) au désaccouplement du démarreur par rapport au moteur à combustion interne.

11. Procédé selon la revendication 10, **caractérisé en ce qu'**un patinage trop important du système de commutation (44) est réduit en augmentant plusieurs fois la vitesse de rotation (n₂) de désaccouplement mécanique pendant un nombre prédéterminé d'opérations de démarrage.

12. Procédé selon l'une des revendications 9 à 11, **caractérisé en ce que** la vitesse de rotation (n₂) augmentée lors du désaccouplement mécanique correspond sensiblement à la vitesse de rotation à vide du moteur (12) du démarreur.

13. Procédé selon l'une des revendications 1 à 6, **caractérisé en ce qu'**un patinage et une lubrification trop faibles du système de commutation (44) sont corrigés par au moins un bref cycle d'alimentation en un courant plus élevé et en diminuant la vitesse de rotation.

14. Procédé selon la revendication 13, **caractérisé en ce que** la commutation utilise des balais (42) de plus grande dureté et de durée de vie plus longue et **en ce qu'**une lubrification de base plus forte du système de commutation (44) est obtenue par un patinage plus important et apte à être corrigé.
